(19) Europäisches Patentamt
European Patent Office
Office européen des brevets

(11) EP 4 725 990 A1

(12) EUROPEAN PATENT APPLICATION
published in accordance with Art. 153(4) EPC

(43) Date of publication:
**15.04.2026 Bulletin 2026/16**

(21) Application number: **24819275.9**

(22) Date of filing: **31.05.2024**

(51) International Patent Classification (IPC):
***C08L 23/00*** (2006.01) ***C08L 23/12*** (2006.01)
***C08L 67/00*** (2006.01) ***C08L 67/04*** (2006.01)

(52) Cooperative Patent Classification (CPC):
**C08L 23/00; C08L 23/12; C08L 67/00; C08L 67/02; C08L 67/03; C08L 67/04**

(86) International application number:
**PCT/JP2024/020095**

(87) International publication number:
**WO 2024/253045 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 JP 2023095551**

(71) Applicants:
- **Sumitomo Chemical Company, Limited**
**Tokyo 103-6020 (JP)**
- **Newlight Technologies, Inc.**
**Huntington Beach CA 92647 (US)**

(72) Inventor: **CHIBA, Shunsuke**
**Ichihara-shi, Chiba 299-0195 (JP)**

(74) Representative: **Vossius & Partner Patentanwälte Rechtsanwälte mbB**
**Siebertstraße 3**
**81675 München (DE)**

# (54) RESIN COMPOSITION

(57) A resin composition includes: an olefin-based polymer A; a polymer B-1; and a polymer B-2. The polymer B-1 is an aliphatic polyester-based polymer, the polymer B-2 is an aromatic polyester-based polymer in which a heat of fusion obtained by differential scanning calorimetry is in a range of 0 to 25 J/g, and, relative to 100 parts by mass in total of the polymer A, the polymer B-1, and the polymer B-2, a content of the polymer A is 64 to 95 parts by mass, a content of the polymer B-1 is 1 to 15 parts by mass, and a content of the polymer B-2 is 1 to 35 parts by mass.



Processed by Luminess, 75001 PARIS (FR)

## Description

### Technical Field

The present invention relates to a resin composition.

### Background Art

Among thermoplastic resins, olefin-based polymers are resins that are inexpensive and lightweight and that have excellent properties such as regarding moldability, mechanical properties, heat resistance, and long-term thermal deterioration resistance. Therefore, olefin-based polymers are used for various containers such as bottles, food packaging materials, container caps, stationery, daily sundries, fibers for carpets and sofas, interior and exterior materials for automobiles, electric and electronic device components, and building materials such as interior materials for buildings and houses. In recent years, improvements in air-tightness, coatability, dyeability, and the like have often been required for these articles.

As one means for meeting these requirements, a method of blending a thermoplastic polyester, represented by polyethylene terephthalate and polybutylene terephthalate, which is superior in air-tightness, coatability, and dyeability to olefin-based polymers, into an olefin-based polymer is considered as described in Patent Literature 1.

### Citation List

### Patent Literature

[Patent Literature 1] Japanese Unexamined Patent Publication No. 2008-261070

Summary of Invention

Technical Problem

However, olefin-based polymers and thermoplastic polyesters have poor compatibility. Therefore, even if a composition containing a sufficiently melt-kneaded olefin-based polymer and a thermoplastic polyester is subjected to dyeing processing with a disperse dye, there has been a problem in that it is difficult to efficiently dye the composition due to phase separation between the olefin-based polymer and the thermoplastic polyester.

The present invention has been made in view of the above problem, and an object of the present invention is to provide a resin composition containing an olefin-based polymer and a thermoplastic polyester and having excellent dyeability.

### Solution to Problem

[1] A resin composition including:

an olefin-based polymer A;
a polymer B-1; and
a polymer B-2,
in which the polymer B-1 is an aliphatic polyester-based polymer,
in which the polymer B-2 is an aromatic polyester-based polymer in which a heat of fusion obtained by differential scanning calorimetry is in a range of 0 to 25 J/g, and
in which, relative to 100 parts by mass in total of the polymer A, the polymer B-1, and the polymer B-2, a content of the polymer A is 64 to 95 parts by mass, a content of the polymer B-1 is 1 to 15 parts by mass, and a content of the polymer B-2 is 1 to 35 parts by mass.

[2] The resin composition according to [1], in which the polymer B-1 is a polyhydroxyalkanoate-based polymer.
[2] The resin composition according to [1], in which the polymer B-1 is a poly(3-hydroxyalkanoate)-based polymer.
[4] The resin composition according to any one of [1] to [3], in which, relative to 100 parts by mass in total of the polymer A, the polymer B-1, and the polymer B-2, the content of the polymer A is 79 to 90 parts by mass, the content of the polymer B-1 is 1 to 15 parts by mass, and the content of the polymer B-2 is 1 to 20 parts by mass.

[5] The resin composition according to any one of [1] to [4], in which the polymer A contains a propylene homopolymer.
[6] A molded article of the resin composition according to any one of [1] to [5].
[7] The molded article according to [6], which is a fiber.

## Advantageous Effects of Invention

According to the present invention, there is provided a resin composition containing an olefin-based polymer and a thermoplastic polyester and having excellent dyeability.

## Description of Embodiments

Hereinafter, some embodiments of the present invention will be described in detail. However, the present invention is not limited to the following embodiments.

A resin composition according to the present invention includes: an olefin-based polymer A; a polymer B-1; and a polymer B-2.

<Olefin-based polymer A>

The olefin-based polymer A is a polymer containing 50 mass% or more of structural units derived from an olefin having 2 to 10 carbon atoms (provided that the total amount of the olefin-based polymer is taken as 100 mass%). Examples of olefins having 2 to 10 carbon atoms include ethylene, propylene, 1-butene, 4-methyl-1-pentene, 1-hexene, 1-octene, and 1-decene.

The olefin-based polymer A may contain structural units derived from monomers other than olefins having 2 to 10 carbon atoms. Examples of monomers other than olefins having 2 to 10 carbon atoms include: aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and non-conjugated dienes such as dicyclopentadiene and 5-ethylidene-2-norbornene.

The olefin-based polymer A may be at least one selected from the group consisting of an ethylene-based polymer, a propylene-based polymer, and a butene-based polymer, and may be a combination of any two or more thereof.

The ethylene-based polymer is a polymer containing 50 mass% or more of structural units derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based polymer may be a combination of two or more ethylene-based polymers.

The propylene-based polymer is a polymer containing 50 mass% or more of structural units derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based polymer may be a combination of two or more propylene-based polymers. It is preferable that the olefin-based polymer A be a propylene-based polymer.

The butene-based polymer is a polymer containing 50 mass% or more of structural units derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. The butene-based polymer may be a combination of two or more butene-based polymers.

The olefin-based polymer may be a single polymer or may be a mixture of two or more polymers.

A melt mass flow rate (MFR) of the olefin-based polymer A, measured under conditions of a temperature of 230°C or 190°C and a load of 2.16 kgf in accordance with JIS K7210-2014, is preferably 0.1 g/10 min or more and 200 g/10 min or less.

A melting point of the olefin-based polymer A may be 110°C to 180°C.

The above-described olefin-based polymer A can be produced by a known polymerization method using a known catalyst for polymerization.

It is preferable that the olefin-based polymer A contain a propylene homopolymer. The propylene homopolymer is a polymer consisting only of structural units derived from propylene. A mass percentage of the propylene homopolymer in the olefin-based polymer A may be 50% or more, 80% or more, or 100 mass%.

A melt mass flow rate of the propylene homopolymer, measured under conditions of a temperature of 230°C and a load of 2.16 kgf, may be 0.1 g/10 min or more, 1 g/10 min or more, 3 g/10 min or more, or 5 g/10 min or more, from the

viewpoint of processability. This melt mass flow rate may be 80 g/10 min or less, 60 g/10 min or less, 50 g/10 min or less, 30 g/10 min or less, or 20 g/10 min or less. The melt mass flow rate of the propylene homopolymer is determined in accordance with JIS K7210-2014.

The propylene homopolymer may be a propylene homopolymer having an isotactic structure. Having an isotactic structure means that an isotactic pentad fraction (hereinafter also referred to as [mmmm]) measured using 13C-NMR is 0.85 or more. This [mmmm] is preferably 0.90 or more, and may be 0.95 or more, 0.96 or more, or 0.97 or more. The [mmmm] may be 0.99 or less.

Here, the isotactic pentad fraction indicates a proportion of isotactic chains in pentad units in a molecular chain measured using 13C-NMR, and is a fraction of a structural unit derived from propylene located at the center of a chain in which five structural units derived from propylene are consecutively meso-bonded. Specifically, it is a value calculated as a fraction of the [mmmm] peak among all absorption peaks in the methyl carbon region observed in a 13C-NMR spectrum. Here, the [mmmm] peak is a peak derived from propylene located at the center of a chain in which five structural units derived from propylene are consecutively meso-bonded.

This [mmmm] can be determined in accordance with the method described in the report of A. Zambelli et al. (Macromolecules, 1973, No. 6).

The propylene homopolymer can be produced by a known polymerization method using, for example, a catalyst system formed by bringing a known solid titanium catalyst component, an organometallic compound catalyst component, and, if necessary, an electron donor into contact; a catalyst system formed by bringing a transition metal compound of Group IV of the periodic table having a cyclopentadienyl ring into contact with an alkylaluminoxane; or a catalyst system formed by bringing a transition metal compound of Group IV of the periodic table having a cyclopentadienyl ring, a compound that reacts with the transition metal compound to form an ionic complex, and an organoaluminum compound into contact.

In addition to the propylene homopolymer, the olefin-based polymer A may contain a propylene-ethylene copolymer containing 50 mass% or more of structural units derived from propylene. A mass percentage of the above propylene-ethylene-based copolymer in the olefin-based polymer A may be 1% or more, and may be 3% or more, and may be 20% or less. By adding a low-melting-point polymer, side feeding of an additive may become easier.

<Aliphatic polyester-based polymer B-1>

The aliphatic polyester-based polymer B-1 has a structure of a polycondensate of an aliphatic polycarboxylic acid component and an aliphatic polyol component, or a polycondensate of an aliphatic hydroxycarboxylic acid, and a main chain of a repeating unit does not contain an aromatic hydrocarbon structure.

Examples of the aliphatic polyester-based polymer B-1 include polymers of hydroxycarboxylic acids or lactones, polycondensates of diols and dicarboxylic acids, and copolymers thereof. When the polymer B is a copolymer, an arrangement style of the copolymer may be any of a random copolymer, an alternating copolymer, a block copolymer, or a graft copolymer.

In addition, at least a part thereof may be crosslinked with a crosslinking agent such as a polyisocyanate such as xylylene diisocyanate or 2,4-tolylene diisocyanate, or a polysaccharide such as cellulose, acetyl cellulose, or ethyl cellulose. Furthermore, at least a part thereof may have any structure of linear, cyclic, branched, star-shaped, or three-dimensional network structure, without particular limitation, and may also be a copolymer with a polyolefin-based resin or a graft polymer with a polyolefin-based resin.

In addition, the aliphatic polyester-based polymer B-1 can be used alone or in combination.

Examples of the hydroxycarboxylic acids include a hydroxycarboxylic acid having 2 to 18 carbon atoms, preferably the number of carbon atoms being 6 or less, and most preferably a hydroxycarboxylic acid having 4 carbon atoms. Specific examples include glycolic acid, L-lactic acid, D-lactic acid, D,L-lactic acid, 3-hydroxybutyrate, 3-hydroxyvalerate, 3-hydroxypropionate, 4-hydroxybutyrate, 4-hydroxyvalerate, 5-hydroxyvalerate, 3-hydroxypentenoate, 3-hydroxyhexanoate, 3-hydroxyheptanoate, 3-hydroxyoctanoate, 3-hydroxynonanoate, and 3-hydroxydecanoate.

In addition, examples of the lactones include propiolactone, butyrolactone, valerolactone, caprolactone, and laurolactone.

As the diols, it is preferable to use a diol having 2 to 10 carbon atoms. Among them, it is more preferable to use an aliphatic diol having 2 to 4 carbon atoms or an alicyclic diol having 5 to 6 carbon atoms. Specific examples include ethylene glycol, 1,3-propanediol, 1,4-butanediol, 1,2-butanediol, 1,5-pentanediol, 1,6-hexanediol, 1,8-octanediol, 1,10-decanediol, 1,12-dodecanediol, 1,14-tetradecanediol, 1,16-hexadecanediol, 1,18-octadecanediol, 1,2-cyclohexanediol, 1,4-cyclohexanediol, 1,2-cyclohexanedimethylol, and 1,4-cyclohexanedimethylol.

As the dicarboxylic acids, it is preferable to use an aliphatic dicarboxylic acid having 2 to 12 carbon atoms. Among them, it is more preferable to use an aliphatic dicarboxylic acid having 2 to 6 carbon atoms or an alicyclic dicarboxylic acid having 5 to 6 carbon atoms. Specific examples include oxalic acid, malonic acid, succinic acid, glutaric acid, adipic acid, pimelic acid, suberic acid, azelaic acid, sebacic acid, undecanedicarboxylic acid, dodecanedicarboxylic acid, 1,14-tetradecanedicarboxylic acid, 1,16-hexadecanedicarboxylic acid, 1,18-octadecanedicarboxylic acid, dimer acid and its hydrogenated product, hexahydrophthalic acid, hexahydroisophthalic acid, and hexahydroterephthalic acid. In addition, these dicarboxylic acids may be derivatives such as alkyl esters having 1 to 4 carbon atoms or acid anhydrides.

Among the above aliphatic polyester-based polymers B-1, it is preferable to use polylactic acid, polybutylene succinate, poly(butylene succinate-co-butylene adipate), polycaprolactone, poly(3-hydroxybutyrate), poly(3-hydroxybutyrate-co-3-hydroxyhexanoate), or polyglycolic acid.

When polylactic acid is used as the aliphatic polyester-based polymer B-1, it is preferable that the polylactic acid have an L-form percentage in the lactic acid component constituting the polylactic acid of 94 mol% or more. By setting the L-form percentage in this range, it is possible to prevent a decrease in the melting point.

<Polyhydroxyalkanoate-based polymer>

The aliphatic polyester-based polymer B-1 may be a polyhydroxyalkanoate-based polymer. The polyhydroxyalkanoate-based polymer is a polyester of a hydroxyalkanoic acid. Examples of hydroxyalkanoic acids include 2-hydroxyalkanoic acid, 3-hydroxyalkanoic acid, and 4-hydroxyalkanoic acid.

Examples of 2-hydroxyalkanoic acid include glycolic acid, lactic acid, and 2-hydroxybutyric acid. Examples of polyesters of 2-hydroxyalkanoic acid, that is, poly(2-hydroxyalkanoate)-based polymers, include polyglycolic acid and polylactic acid.

Examples of 3-hydroxyalkanoic acid include 3-hydroxybutyric acid, 3-hydroxypropionic acid, 3-hydroxypentanoic acid, and 3-hydroxyhexanoic acid. The polyesters of 3-hydroxyalkanoic acid, that is, poly(3-hydroxyalkanoate)-based polymers, will be described in detail below.

Examples of 4-hydroxyalkanoic acid include 4-hydroxybutyric acid, 4-hydroxypentanoic acid, and 4-hydroxyhexanoic acid.

The polyhydroxyalkanoate-based polymer may be a homopolymer of a hydroxyalkanoic acid or a polymer of two or more hydroxyalkanoic acids.

<Poly(3-hydroxyalkanoate)-based polymer>

The aliphatic polyester-based polymer B-1 can be a poly(3-hydroxyalkanoate)-based polymer.

The poly(3-hydroxyalkanoate)-based polymer is a polyhydroxyalkanoate, that is, a polycondensate (polyester) of a hydroxyalkanoic acid, and necessarily contains a repeating unit of 3-hydroxyalkanoate represented by formula (1). In formula (1), R is a hydrogen atom, a halogen atom, an alkyl group having 1 to 15 carbon atoms, a cyano group, an amino group having 1 to 11 carbon atoms, an alkoxy group (alkyloxy group) having 1 to 11 carbon atoms, an amide group having 2 to 20 carbon atoms, an aryl group having 6 to 12 carbon atoms, or a monovalent heterocyclic group having 1 to 9 carbon atoms. These groups may have substituents. Particularly, from the viewpoint of compatibility with components other than the polymer B contained in the composition (for example, the olefin-based polymer A), R is preferably an alkyl group having 1 to 8 carbon atoms, an amide group having 1 to 20 carbon atoms, or an aryl group having 6 to 8 carbon atoms.

$$[\text{-O-CHR-CH}_2\text{-CO-}] \ldots \qquad (1)$$

Examples of the halogen atom include F, Cl, Br, and I.

An alkyl group having 1 to 15 carbon atoms may be linear or branched. The number of carbon atoms in the alkyl group is preferably 1 to 8, and more preferably 1 to 4. Examples of the alkyl group include methyl group, ethyl group, propyl group, isopropyl group, butyl group, isobutyl group, sec-butyl group, tert-butyl group, pentyl group, isopentyl group, 2-methylbutyl group, 1-methylbutyl group, hexyl group, isohexyl group, 3-methylpentyl group, 2-methylpentyl group, 1-methylpentyl group, heptyl group, octyl group, isooctyl group, 2-ethylhexyl group, 3,7-dimethyloctyl group, nonyl group, decyl group, undecyl group, dodecyl group, tetradecyl group, and pentadecyl group.

Examples of amino groups having 1 to 18 carbon atoms include amino group, alkylamino group, dialkylamino group, arylamino group, alkylarylamino group, benzylamino group, and dibenzylamino group.

Examples of alkylamino groups include methylamino group, ethylamino group, propylamino group, butylamino group, pentylamino group, hexylamino group, heptylamino group, octylamino group, nonylamino group, decylamino group, dodecylamino group, isopropylamino group, isobutylamino group, isopentylamino group, sec-butylamino group, tert-butylamino group, sec-pentylamino group, tert-pentylamino group, tert-octylamino group, neopentylamino group, cyclopropylamino group, cyclobutylamino group, cyclopentylamino group, cyclohexylamino group, cycloheptylamino group, cyclooctylamino group, 1-adamantylamino group, and 2-adamantylamino group.

Examples of dialkylamino groups include dimethylamino group, diethylamino group, dipropylamino group, dibutylamino group, dipentylamino group, diisopropylamino group, diisobutylamino group, diisopentylamino group,

methylethylamino group, methylpropylamino group, methylbutylamino group, methylisobutylamino group, dicyclopropylamino group, pyrrolidino group, piperidino group, and piperazino group.

Examples of arylamino groups include anilino group, 1-naphthylamino group, 2-naphthylamino group, o-toluidino group, m-toluidino group, p-toluidino group, 1-fluorenamino group, 2-fluorenamino group, 2-thiazolamino group, and p-terphenylenamino group.

Examples of alkylarylamino groups include N-methylanilino group, N-ethylanilino group, N-propylanilino group, N-butylanilino group, N-isopropylanilino group, and N-pentylanilino group.

Examples of alkoxy groups having 1 to 11 carbon atoms include methoxy group, ethoxy group, propoxy group, isopropoxy group, butoxy group, isobutoxy group, sec-butoxy group, tert-butoxy group, cyclopropoxy group, cyclobutoxy group, and cyclopentoxy group.

The term "amide group" means a group obtained by removing one hydrogen atom bonded to a nitrogen atom from a carboxylic acid amide. Examples of amide groups having 1 to 20 carbon atoms include groups represented by $-NH-C(=O)-R^A$ (where $R^A$ is a hydrogen atom or a monovalent organic group), such as formamide group, acetamide group, propionamide group, butyramide group, benzamide group, trifluoroacetamide group, and pentafluorobenzamide group, and groups represented by $-N(-C(=O)-R^A)(-C(=O)-R^B)$ (where $R^A$ and $R^B$ are each independently a hydrogen atom or a monovalent organic group), such as diformamide group, diacetamide group, dipropionamide group, dibutyramide group, dibenzamide group, ditrifluoroacetamide group, and dipentafluorobenzamide group. The organic group can be an alkyl group, an alkoxy group, or an aryl group, which may be substituted with a halogen atom. Among these, the amide group is preferably a formamide group, an acetamide group, a propionamide group, a butyramide group, or a benzamide group.

Examples of aryl groups having 6 to 12 carbon atoms include phenyl group, tolyl group, xylyl group, naphthyl group, and biphenyl group, and among these, phenyl group, tolyl group, and xylyl group are more preferable.

Examples of heteroatoms of a monovalent heterocyclic group having 1 to 9 carbon atoms include N, O, and S, which may be saturated or unsaturated, may have one or more heteroatoms, and may have heteroatoms of different kinds. Examples of such heterocyclic groups include thienyl group, pyrrolyl group, furyl group, pyridyl group, piperidinyl group, quinolyl group, isoquinolinyl group, pyrimidinyl group, triazinyl group, and thiazolyl group.

Repeating units of the aliphatic polyester-based polymer B-1 may consist only of one or more kinds of 3-hydroxyalkanoates represented by formula (1), or may have one or more kinds of 3-hydroxyalkanoates represented by formula (1) and one or more kinds of other hydroxyalkanoates.

The aliphatic polyester-based polymer B-1 preferably contains 50 mol% or more, and more preferably 70 mol% or more, of the repeating units of 3-hydroxyalkanoates represented by formula (1) relative to all the repeating units of hydroxyalkanoates (100 mol%).

Examples of 3-hydroxyalkanoates represented by formula (1) include, when R is a hydrogen atom or an alkyl group represented by $C_nH_{2n+1}$, where n is an integer of 1 to 15, 3-hydroxybutyrate (hereinafter sometimes referred to as 3HB) where n=1, 3-hydroxyvalerate (hereinafter sometimes referred to as 3HV) where n=2, 3-hydroxyhexanoate (hereinafter sometimes referred to as 3HH) where n=3, 3-hydroxyoctanoate where n=5, 3-hydroxyoctadecanoate where n=15, and 3-hydroxypropionate where R is a hydrogen atom.

Examples of the polymer B having only one kind of repeating unit represented by formula (1) include poly(3-hydroxybutyrate) (hereinafter sometimes referred to as P3HB).

Examples of the polymer B having only a plurality of kinds of repeating units represented by formula (1) include poly(3-hydroxybutyrate-co-3-hydroxyhexanoate) (hereinafter sometimes referred to as P3HB3HH), poly(3-hydroxybutyrate-co-3-hydroxyvalerate) (hereinafter sometimes referred to as P3HB3HV), and poly(3-hydroxybutyrate-co-3-hydroxypropionate) (hereinafter sometimes referred to as P3HB3HP).

Examples of hydroxyalkanoates other than the 3-hydroxyalkanoates represented by formula (1) include repeating units represented by formula (2) (where $R^1$ is a hydrogen atom or an alkyl group represented by $Cn_H2_{n+1}$, n is an integer of 1 to 15, and m is an integer of 2 to 10).

$$[-O-CHR^1-C_mH_{2m+1}-CO-] \ldots \qquad (2)$$

Examples of aliphatic polyester-based polymers B-1 containing the repeating units of formulas (1) and (2) include poly(3-hydroxybutyrate-co-4-hydroxybutyrate) (for example, the following formula (P3HB4HB)).

From the viewpoint of increasing the melting point, it is preferable that the repeating units of the aliphatic polyester-based polymer B-1 contain at least 3-hydroxybutyrate among the 3-hydroxyalkanoates represented by formula (1).

The aliphatic polyester-based polymer B-1 preferably contains 50 mol% or more, and more preferably 70 mol% or more, of the repeating units of 3-hydroxybutyrate relative to all the repeating units of hydroxyalkanoates (100 mol%).

The aliphatic polyester-based polymer B-1 may have repeating units of two or more kinds of esters, and for example, may be a copolymer having two kinds of repeating units, a terpolymer having three kinds of repeating units, or a

tetrapolymer having four kinds of repeating units, as described above.

For example, an example of a terpolymer is poly(3-hydroxybutyrate-co-3-hydroxyvalerate-co-3-hydroxyhexanoate) (hereinafter sometimes referred to as (P3HB3HV3HH)).

As described above, it is preferable that the aliphatic polyester-based polymer B-1 include 3-hydroxybutyrate among the repeating units of 3-hydroxyalkanoates represented by formula (1). A percentage XX of the repeating units of 3-hydroxybutyrate relative to 100 mol of ester repeating units of all hydroxyalkanoates is preferably 90 mol% or more, more preferably 95 mol% or more, and still more preferably 98.0 mol% or more.

The percentage XX is usually 100 mol% or less, preferably 99.9 mol% or less, and preferably 99.8 mol% or less.

An arrangement style of the copolymer may be any of a random copolymer, an alternating copolymer, a block copolymer, or a graft copolymer.

The aliphatic polyester-based polymer B-1 may have ester repeating units other than those of formulas (1) and (2), but the main chain of the other ester repeating units does not contain an aromatic hydrocarbon structure. That is, the aliphatic polyester-based polymer B-1 is an aliphatic polyester. However, it is possible that a group having an aromatic hydrocarbon group is bonded to a carbon atom in the main chain of the other ester repeating units.

A composition ratio of repeating units in the aliphatic polyester-based polymer B-1 can be determined by calculation from NMR measurement results of 1H-NMR, 13C-NMR or the like, as described in L. Tripathi, M. C. Factories, 11, 44 (2012).

In addition, the aliphatic polyester-based polymer B-1 can be a mixture of two or more types of poly(3-hydroxyalkanoate)-based polymers.

A weight-average molecular weight (Mw) of the aliphatic polyester-based polymer B-1 can be 10,000 to 1,000,000, preferably 20,000 to 800,000, and more preferably 30,000 to 600,000. By setting the weight-average molecular weight (Mw) to 10,000 or more, it becomes possible to obtain a molded article having excellent impact strength and tensile elongation. In addition, by setting the weight-average molecular weight to 500,000 or less, dispersibility in the olefin-based polymer A becomes favorable. The weight-average molecular weight may be 400,000 or less, 300,000 or less, 200,000 or less, or 100,000 or less. In the present specification, the weight-average molecular weight (Mw) is measured by GPC using standard polystyrene as a molecular weight standard substance.

The aliphatic polyester-based polymer B-1 is a thermoplastic resin, and is preferably crystalline.

A melt mass flow rate (MFR(B-1)) of the aliphatic polyester-based polymer B-1 measured under conditions of a temperature of 190°C or 170°C and a load of 2.16 kgf in accordance with JIS K7210-2014 is preferably 0.1 g/10 min or more and 200 g/10 min or less. The MFR(B-1) may be 1 g/10 min or more, 3 g/10 min or more, 5 g/10 min or more, 7 g/10 min or more, 8 g/10 min or more, 10 g/10 min or more, or 20 g/10 min or more. The MFR(B-1) may be 150 g/10 min or less, and may also be 100 g/10 min or less.

A melting point (Tm) of the aliphatic polyester-based polymer B-1 is preferably 150°C or higher, and may be 155°C or higher, 160°C or higher, 165°C or higher, 170°C or higher, or 175°C or higher. A melting point (Tm) of the polymer B can be 220°C or lower, and may be 200°C or lower, and may be 190°C or lower.

The melting point (Tm) of the aliphatic polyester-based polymer B-1 is measured by the position of a main peak based on the melting of crystals, as determined by differential scanning calorimetry (DSC) measurement in accordance with JIS K7121.

The poly(3-hydroxyalkanoate)-based polymer may be produced by microorganisms or may be derived from compounds (for example, cyclic lactones) derived from petroleum or plant raw materials.

In the poly(3-hydroxyalkanoate)-based polymer, the repeating units of hydroxyalkanoates may consist only of D-form (R-form), as in one produced by microorganisms, or may include both D-form (R-form) and L-form (S-form), as in one derived from a mixture of D-form (R-form) and L-form (S-form).

In the poly(3-hydroxyalkanoate)-based polymer produced by microorganisms, the repeating units of formula (1) can be represented as the following formula. In formula (BI-1), n represents a degree of polymerization.

[Chem. 1]

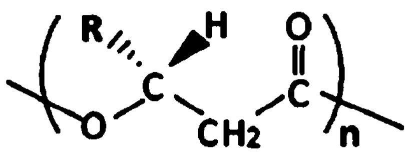

··· (B I − 1)

Moreover, for example, poly(3-hydroxybutyrate) produced by microorganisms has the following structure. In formula (BI-2), n represents a degree of polymerization.

[Chem. 2]

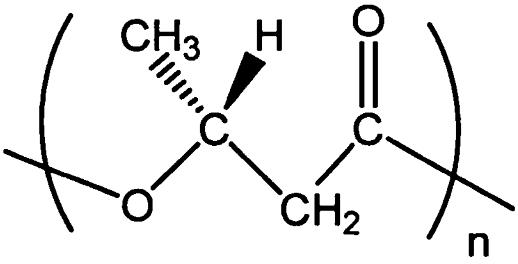

··· (B I − 2)

In addition, poly(3-hydroxybutyrate-co-3-hydroxyhexanoate) produced by microorganisms has the following structure. In formula (BI-3), m and n represent degrees of polymerization.

[Chem. 3]

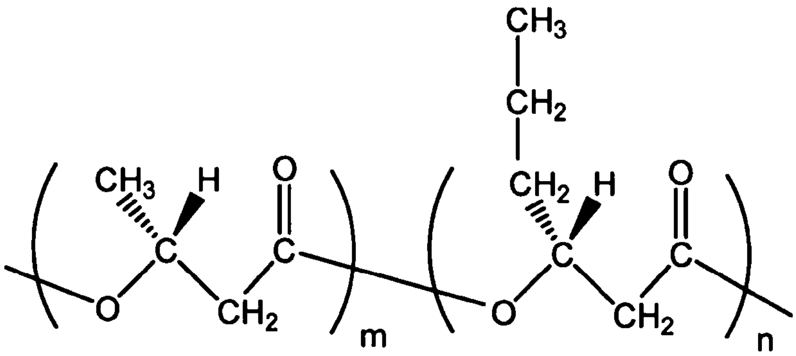

··· (B I − 3)

In addition, poly(3-hydroxybutyrate-co-4-hydroxybutyrate) produced by microorganisms has the following structure. In formula (BI-4), m and n represent degrees of polymerization.

[Chem. 4]

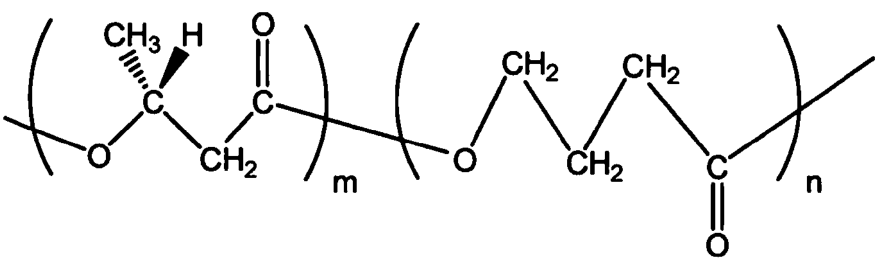

··· (B I − 4)

The aliphatic polyester-based polymer B-1 can have biodegradability.

For example, the poly(3-hydroxyalkanoate)-based polymer can be produced by microorganisms such as Alcaligenes eutrophus AC32 strain (internationally deposited under the Budapest Treaty; International Depositary Authority: International Patent Organism Depositary, National Institute of Advanced Industrial Science and Technology, (Central 6, 1-1-1 Higashi, Tsukuba City, Ibaraki Prefecture, Japan), original deposit date: August 12, 1996; transferred on August 7, 1997; accession number FERM BP-6038 (transferred from original deposit FERM P-15786), into which a PHA synthase gene derived from Aeromonas caviae has been introduced (J. Bacteriol., 179, 4821 (1997)).

<Aromatic polyester-based polymer B-2>

The aromatic polyester-based polymer B-2 of the present embodiment is an aromatic polyester in which a heat of fusion obtained by differential scanning calorimetry is in a range of 0 to 25 J/g. The term "aromatic polyester" refers to a polymer having an aromatic hydrocarbon structure (aromatic ring) and ester bonds in a main chain.

The aromatic polyester-based polymer B-2 can be a polycondensate of a polycarboxylic acid and a polyol (polyhydroxy compound). The term "polycarboxylic acid" refers to an organic compound having a plurality of carboxyl groups or a derivative thereof (for example, an acid anhydride or an ester). In addition, the term "polyol (polyhydroxy compound)" refers to an organic compound having a plurality of hydroxyl groups.

In the aromatic polyester-based polymer B-2, a main chain of a structural unit derived from a polycarboxylic acid may have an aromatic ring, a main chain of a structural unit derived from a polyol may have an aromatic ring, or both the main chain of the structural unit derived from a polycarboxylic acid and the main chain of the structural unit derived from a polyol may have aromatic rings.

From the viewpoint of lowering the melting point, it is preferable that the structural unit derived from a polycarboxylic acid have an aromatic ring in its main chain and the structural unit derived from a polyol does not have an aromatic ring in its main chain. It is more preferable that the structural unit derived from a polyol be aliphatic. The aliphatic structure may include those containing an oxygen atom.

Examples of polycarboxylic acids in which the main chain of the structural unit derived from a polycarboxylic acid has an aromatic ring include terephthalic acid, isophthalic acid, orthophthalic acid, 2,6-naphthalenedicarboxylic acid, diphenyl ether-4,4'-dicarboxylic acid, trimellitic acid, trimellitic acid, and derivatives thereof. The polycarboxylic acid may contain one kind of polycarboxylic acid or may contain a plurality of kinds of polycarboxylic acids.

Among these, the polycarboxylic acid preferably contains terephthalic acid. A ratio of the number of moles of structural units derived from polycarboxylic acids other than terephthalic acid to the number of moles of structural units derived from all acid components can be 10 mol% or less, 5 mol% or less, 1 mol% or less, or 0.5 mol% or less.

When the polycarboxylic acid contains terephthalic acid, the polycarboxylic acid may further contain other polycarboxylic acid components in addition to terephthalic acid.

Examples of the other polycarboxylic acid components include the above aromatic polycarboxylic acids other than terephthalic acid, and aliphatic polycarboxylic acids such as adipic acid, sebacic acid, succinic acid, dimer acid, 1,4-cyclohexanedicarboxylic acid, and derivatives thereof.

Examples of polyols in the case where the structural unit derived from a polyol is aliphatic include aliphatic polyols such as ethylene glycol, 2,2-dimethyl-1,3-propanediol (neopentyl glycol), 1,3-propanediol, 2-methyl-1,3-propanediol, 2-butyl-2-ethyl-1,3-propanediol, 1,2-propanediol, 1,4-butanediol, 1,3-butanediol, diethylene glycol, 1,4-cyclohexanediol, and 1,4-cyclohexanedimethanol.

Any polyol may be added alone, or two or more polyols may be added in any ratio.

In the aromatic polyester, when the structural unit derived from a polycarboxylic acid has an aromatic ring in its main chain and the structural unit derived from a polyhydroxy compound also has an aromatic ring in its main chain, examples of the polyhydroxy compounds having an aromatic ring in the main chain include hydroquinone, 4,4'-dihydroxybiphenyl, and bisphenol A.

In addition, the aromatic polyester-based polymer B-2 may be a polycondensate of a monomer that does not contain a polycarboxylic acid. For example, the aromatic polyester-based polymer B-2 may be a polycondensate of an aromatic hydroxycarboxylic acid in which two H atoms of an aromatic ring are substituted with a hydroxyl group and a carboxyl group. Examples of the aromatic hydroxycarboxylic acid include para-hydroxybenzoic acid and 6-hydroxy-2-naphthalenecarboxylic acid.

In addition, the aromatic polyester-based polymer B-2 may be a polycondensate of a mixture of an aromatic hydroxycarboxylic acid and at least one of a polyol and a polycarboxylic acid. The polyol and the polycarboxylic acid in this case may each be independently aliphatic or an aromatic compound having an aromatic ring in its main chain.

In the aromatic polyester-based polymer B-2, a heat of fusion obtained by differential scanning calorimetry is in a range of 0 to 25 J/g. The differential scanning calorimetry can be performed in accordance with JIS K 7122-1987. The heating rate is 10 °C/min. The heat of fusion can be calculated from an area of a melting peak in a DSC curve during the heating process of the aromatic polyester-based polymer B-2. When no melting peak is observed, the heat of fusion becomes 0. In such an aromatic polyester-based polymer B-2 having a small heat of fusion, a clear melting point is often not observed in DSC. Such an aromatic polyester-based polymer B-2 is sometimes referred to as an amorphous aromatic polyester-based polymer, can be obtained by quenching an aromatic polyester, and is also commercially available.

A melt mass flow rate (MFR(B-2)) of the polymer B-2 measured under conditions of a temperature of 230°C and a load of 2.16 kgf in accordance with JIS K7210-2014 is preferably 0.1 g/10 min or more and 200 g/10 min or less. The MFR(B-2) may be 1 g/10 min or more, 3 g/10 min or more, 5 g/10 min or more, 7 g/10 min or more, or 8 g/10 min or more. The MFR(B-2) may be 150 g/10 min or more, 100 g/10 min or more, and 70 g/10 min or less.

<Composition of resin composition>

The resin composition contains 64 to 95 parts by mass of an olefin-based polymer A, 1 to 15 parts by mass of an aliphatic polyester-based polymer B-1, and 1 to 35 parts by mass of an aromatic polyester-based polymer B-2 relative to 100 parts by mass in total of the olefin-based polymer A, the aliphatic polyester-based polymer B-1, and the aromatic

polyester-based polymer B-2. The resin composition can contain 79 to 90 parts by mass of the olefin-based polymer A, 1 to 15 parts by mass of the aliphatic polyester-based polymer B-1, and 1 to 20 parts by mass of the aromatic polyester-based polymer B-2 relative to 100 parts by mass in total of the olefin-based polymer A, the aliphatic polyester-based polymer B-1, and the aromatic polyester-based polymer B-2. The aromatic polyester-based polymer B-2 may be 2 parts by mass or more or 4 parts by mass or more, and 18 parts by mass or less or 16 parts by mass or less.

The total percentage of the olefin-based polymer A, the aliphatic polyester-based polymer B-1, and the aromatic polyester-based polymer B-2 in the entire resin composition can be 50 mass% or more, and may be 60 mass% or more, 70 mass% or more, 80 mass% or more, or 90 mass% or more.

The aliphatic polyester-based polymer B-1 may form a dispersed phase in the olefin-based polymer A. The aromatic polyester-based polymer B-2 may form a dispersed phase in the olefin-based polymer A.

The polymer B-1 forming a dispersed phase means that the resin composition has a sea-island structure in which the olefin-based polymer A is a continuous phase (sea portion) and the polymer B-1 is a dispersed phase (island portion). The polymer B-2 forming a dispersed phase means that the resin composition has a sea-island structure in which the olefin-based polymer A is a continuous phase (sea portion) and the polymer B-2 is a dispersed phase (island portion). The dispersed phase of the polymer B-1 and the dispersed phase of the polymer B-2 can be dispersed independently of each other in the continuous phase. An average equivalent circle diameter of the dispersed phase (island portion) may be 10 nm to 400 μm.

The resin composition may contain other components. Examples of the other components include compound C and additives.

(Compound C)

Compound C has a heterocyclic group having two or more heteroatoms in a molecule.

Compound C may be a low-molecular-weight compound, but is preferably a polymer in which a weight-average molecular weight (Mw) is 5000 or more. When compound C is a polymer, the above functional group may be present in any of a main chain, a side chain, or a terminal, but is preferably present in a side chain. The polymer may be any of a block, graft, or random copolymer.

Compound C may have a functional group other than the above functional group. Compound C may be a mixture of two or more compounds.

(Compound C having heterocyclic group having two or more heteroatoms)

Examples of heteroatoms include N, O, S, and P. The heterocyclic group may be saturated or unsaturated, but is preferably unsaturated. A total number of carbon atoms and heteroatoms constituting the ring may be 3 to 9.

It is preferable that the heterocyclic group have two or more kinds of heteroatoms. An example of a combination of two kinds thereof is a combination of O and N.

It is preferable that the heterocyclic group be an oxazolyl group. Among them, it is preferable that it be a 2-oxazolyl group. The 2-oxazolyl group is represented by the following formula. $R^1$ to $R^4$ each independently represent a hydrogen atom or a hydrocarbon group having 1 to 20 carbon atoms, preferably 1 to 10 carbon atoms. * represents a bonding site, and when compound C is a polymer, the oxazolyl group can be bonded to a carbon atom constituting a main chain directly or via another functional group. Examples of the other functional group include an alkyl group having 1 to 12 carbon atoms, an alkyl group having 1 to 12 carbon atoms and containing an oxygen atom, and an alkyl group having 1 to 12 carbon atoms and containing a sulfur atom.

[Chem. 5]

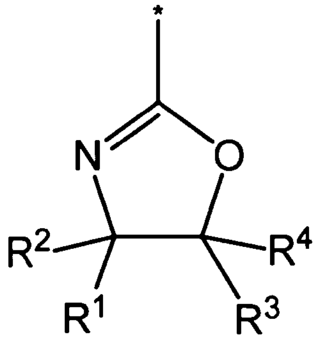

Compound C may be a homopolymer of an oxazolyl group-containing monomer, or may be a copolymer of an oxazolyl group-containing monomer and an oxazolyl group-free monomer.

Examples of oxazolyl group-containing monomers include vinyl oxazoline compounds {for example, vinyl oxazoline (such as 2-vinyl-2-oxazoline); and substituted vinyl oxazolines [for example, alkyl vinyl oxazolines (for example, C1-20 alkyl vinyl oxazolines such as 2-vinyl-4-methyl-2-oxazoline, 2-vinyl-4,4-dimethyl-2-oxazoline, 2-vinyl-4-ethyl-2-oxazoline, 2-vinyl-4-propyl-2-oxazoline, 2-vinyl-4-butyl-2-oxazoline, 2-vinyl-5-methyl-2-oxazoline, 2-vinyl-5-ethyl-2-oxazoline, 2-vinyl-5-propyl-2-oxazoline, and 2-vinyl-5-butyl-2-oxazoline, preferably C1-10 alkyl vinyl oxazolines, and more preferably mono- or di-C1-4 alkyl vinyl oxazolines)]}; isopropenyl oxazolines {for example, isopropenyl oxazoline (such as 2-isopropenyl-2-oxazoline); and substituted isopropenyl oxazolines [for example, alkyl isopropenyl oxazolines (for example, C1-20 alkyl isopropenyl oxazolines such as 2-isopropenyl-4-methyl-2-oxazoline, 2-isopropenyl-4,4-dimethyl-2-oxazoline, 2-isopropenyl-4-ethyl-2-oxazoline, 2-isopropenyl-4-propyl-2-oxazoline, 2-isopropenyl-4-butyl-2-oxazoline, 2-isopropenyl-5-methyl-2-oxazoline, 2-isopropenyl-5-ethyl-2-oxazoline, 2-isopropenyl-5-propyl-2-oxazoline, and 2-isopropenyl-5-butyl-2-oxazoline, preferably C1-10 alkyl isopropenyl oxazolines, and more preferably mono- or di-C1-4 alkyl isopropenyl oxazolines)]}; and allyl oxazolines corresponding thereto.

Among these, isopropenyl oxazolines are preferable, and 2-isopropenyl-2-oxazoline is particularly preferable. In this case, compound C has a structural unit of 4,5-dihydro-2-(1-methylethylene)-oxazolyl.

The oxazolyl group-containing monomer may be used alone or in combination of two or more thereof.

A percentage of structural units based on the oxazolyl group-containing monomer in compound C is not particularly limited, but may be, for example, 1 mass% or more (for example, 5 mass% or more), preferably 10 mass% or more, and more preferably 15 mass% or more, relative to the entire compound C.

Specifically, the percentage of structural units based on the oxazolyl group-containing monomer in the entire compound C may be 20 mass% or more, preferably 30 mass% or more, and more preferably 40 mass% or more (for example, 45 mass% or more), and can also be 50 mass% or more (for example, 60 mass% or more, preferably 70 mass% or more).

Examples of oxazolyl group-free monomers can be appropriately selected depending on the application or the like of the oxazolyl group-containing polymer and are not particularly limited. Examples thereof include styrene-based monomers or aromatic vinyl-based monomers, for example, styrene, α-alkylstyrenes (for example, α-C1-4 alkylstyrenes such as α-methylstyrene), alkylstyrenes (for example, C1-4 alkylstyrenes such as vinyltoluene), and halostyrenes (for example, chlorostyrene)]; vinyl esters (for example, vinyl acetate and vinyl propionate); unsaturated nitriles (for example, acrylonitrile and methacrylonitrile); vinyl ethers (for example, alkyl vinyl ethers such as methyl vinyl ether and ethyl vinyl ether); amide group-containing monomers [for example, (meth)acrylamide and N-substituted (meth)acrylamides (for example, N-alkyl(meth)acrylamides such as N-methyl(meth)acrylamide)]; olefin-based monomers [for example, alkenes (for example, C2-10 alkenes such as ethylene, propylene, 1-butene, isobutylene, and 1-octene)]; halogen-containing monomers (for example, halo-C2-10 alkenes such as vinyl chloride, vinylidene chloride, and vinyl fluoride); and (meth) acrylic monomers {for example, (meth)acrylic acid; (meth)acrylic acid alkyl esters [for example, C1-20 alkyl (meth) acrylates such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, pentyl (meth)acrylate, n-hexyl (meth)acrylate, and 2-ethylhexyl (meth)acrylate]; cycloalkyl (meth)acrylates [for example, C3-20 cycloalkyl (meth) acrylates such as cyclohexyl (meth)acrylate]; aryl (meth)acrylates [for example, C6-20 aryl (meth)acrylates such as phenyl (meth)acrylate]; aralkyl (meth)acrylates [for example, C6-10 aryl C1-4 alkyl (meth)acrylates such as benzyl (meth) acrylate]; (meth)acrylic acid esters having a hydroxyl group [for example, hydroxyalkyl (meth)acrylates (for example, hydroxy-C2-10 alkyl (meth)acrylates such as 2-hydroxyethyl (meth)acrylate)]; (meth)acrylic acid esters having an alkoxy

group [for example, alkoxyalkyl (meth)acrylates (for example, C1-10 alkoxy C2-10 alkyl (meth)acrylates such as 2-methoxyethyl (meth)acrylate)]; and glycidyl (meth)acrylate}.

The oxazolyl group-free monomer may be used alone or in combination of two or more thereof.

Among these oxazolyl group-free monomers, a styrenic monomer may be particularly suitably used.

When the oxazolyl group-free monomer contains a styrene-based monomer, the percentage of structural units derived from the styrene-based monomer to structural units derived from the oxazolyl group-free monomer may be, for example, 5 mass% or more (for example, 10 mass% or more), preferably 20 mass% or more (for example, 30 mass% or more), more preferably 40 mass% or more (for example, 50 mass% or more), and particularly preferably 60 mass% or more (for example, 70 mass% or more), and may be 80 mass% or more (for example, 90 mass% or more).

When the oxazolyl group-free monomer is used, the ratio of structural units derived from the oxazolyl group-containing monomer to structural units derived from the oxazolyl group-free monomer (former/latter, mass ratio) may be, for example, about 99/1 to 5/95 (for example, 98/2 to 10/90), preferably 97/3 to 12/88 (for example, 96/4 to 15/85), and more preferably 95/5 to 18/82 (for example, 93/7 to 20/80), and may be generally 99/1 to 25/75 (for example, 98/2 to 30/70, preferably 95/5 to 40/60, and more preferably 90/10 to 45/55).

The compound containing an oxazolyl group may be a low-molecular-weight compound rather than a polymer. Examples of low-molecular-weight compounds include those having, as a constituent unit, a divalent group obtained by removing two hydrogen atoms from 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), or 2,2'-diphenylenebis(2-oxazoline).

The percentage of compound C in the entire resin composition may be 0.01 mass% or more, 0.1 mass% or more, or 0.5 mass% or more, and can be less than 50 mass%, and may be 30 mass% or less, 20 mass% or less, 10 mass% or less, or 5 mass% or less.

(Additives)

The resin composition may contain an additive as required. The additive can be at least one selected from the group consisting of stabilizers, antibacterial agents, antifungal agents, dispersants, plasticizers, flame retardants, tackifiers, colorants, metal powders, organic powders, inorganic fibers, organic fibers, organic and inorganic composite fibers, inorganic whiskers, and fillers.

Examples of the stabilizers include at least one selected from the group consisting of lubricants, antiaging agents, heat stabilizers, light resistance agents, weathering stabilizers, metal deactivators, ultraviolet absorbers, light stabilizers, and copper damage inhibitors. An example of the light resistance agents is a hindered amine-based light resistance agent.

Examples of the colorants include dyes such as organic dyes, and at least one selected from the group consisting of titanium oxide, carbon black, and organic pigments. An example of the metal powders is ferrite.

An example of the organic powders is a protein. Examples of the inorganic fibers include glass fibers and metal fibers. Examples of the organic fibers include carbon fibers and aramid fibers. An example of the inorganic whiskers is a potassium titanate whisker.

Examples of the fillers include at least one selected from the group consisting of glass beads, glass balloons, glass flakes, asbestos, mica, calcium carbonate, talc, silica, calcium silicate, hydrotalcite, kaolin, diatomaceous earth, graphite, pumice, ebonite powder, cotton flock, cork powder, barium sulfate, fluororesins, cellulose powder, and wood flour.

The resin composition may contain only one kind of the above additives or a combination of two or more kinds thereof. The percentage of the additive in the entire resin composition may be 0.01 mass% or more, 0.1 mass% or more, or 0.5 mass% or more, and can be less than 50 mass%, and may be 30 mass% or less, 20 mass% or less, 10 mass% or less, or 5 mass% or less.

In the resin composition, the additive may be contained in any of the phases of the polymers A, B-1, and B-2. The additive may form a dispersed phase different from the polymers B-1 and B-2 in a continuous phase of the olefin-based polymer A.

(Method for producing resin composition)

The above resin composition can be obtained by melt-kneading the above olefin-based polymer A, aliphatic polyester-based polymer B-1, aromatic polyester-based polymer B-2, and, if necessary, an additive to be added. It is preferable that the kneading temperature (set temperature of the kneading machine) be 150°C to 300°C, and more preferably 170°C to 280°C. In addition, a pre-kneaded material can be obtained by melt-kneading a part of each of the olefin-based polymer A and parts of the polymers B-1 and B-2, and subsequently, the remaining portions of the olefin-based polymer A and the polymers B-1 and B-2 can be added to the pre-kneaded material and further melt-kneaded to obtain a resin composition such as pellets.

When the aliphatic polyester-based polymer B-1 having a heat of fusion in the range of 0 to 25 J/g is melt-kneaded as a raw material, in the obtained resin composition such as pellets, the heat of fusion of the aliphatic polyester-based polymer B-1 dispersed in the olefin-based polymer A phase tends to be maintained at a low value in the range of 0 to 25 J/g. Furthermore, even when a resin composition containing, as a dispersed phase, the aliphatic polyester-based polymer B-1 having a heat of fusion in the range of 0 to 25 J/g is molded, the heat of fusion of the aliphatic polyester-based polymer B-1 forming the dispersed phase tends to be maintained in the range of 0 to 25 J/g.

Specifically, the resin composition can be in the form of pellets. An example of a method for producing the pellets includes a step of obtaining strands by extruding the resin composition obtained by melt-kneading through a die, and a step of cutting the strands while cooling or after solidifying the strands.

To solidify the strands, the strands may be brought into contact with water, or may be brought into contact with a gas such as air on a belt or the like.

Known dies, cooling devices, and cutting devices can be used.

(Method for producing molded article of resin composition)

A molded article of the above resin composition having a desired shape can be obtained by using a known resin molding method such as injection molding, extrusion molding, spinning molding, vacuum molding, pressure molding, press molding, foam molding, blow molding, or rotational molding, using the above resin composition such as pellets as a raw material. The shape of the molded article is not particularly limited and may be, for example, a film, sheet, plate, or fiber. The molded article can have the same composition as the above resin composition. That is, the molded article includes an olefin-based polymer A, a polymer B-1, and a polymer B-2, in which the polymer B-1 is an aliphatic polyester-based polymer, the polymer B-2 is an aromatic polyester-based polymer in which a heat of fusion obtained by differential scanning calorimetry is in a range of 0 to 25 J/g, and, relative to 100 parts by mass in total of the polymer A, the polymer B-1, and the polymer B-2, a content of the polymer A is 64 to 95 parts by mass, a content of the polymer B-1 is 1 to 15 parts by mass, and a content of the polymer B-2 is 1 to 35 parts by mass. The details and preferable concentrations of each component are as described above.

In addition, the above resin composition can be laminated with another material such as another resin, fiber, metal, paper, or leather to obtain a multilayer structure.

The surface of the molded article of the resin composition of the present invention may be subjected to surface treatment. Examples of the surface treatment method include methods such as embossing treatment, corona discharge treatment, flame treatment, plasma treatment, and ozone treatment.

The above resin composition can be widely used as a resin material.

The above resin composition and its molded article have excellent dyeability because they contain a predetermined amount of the aromatic polyester-based polymer B-2 in which a heat of fusion obtained by differential scanning calorimetry is in the range of 0 to 25 J/g, in addition to the aliphatic polyester-based polymer B-1. Although the reason for this is not clear, it is considered, for example, that the disperse dye is likely to penetrate into the resin composition.

(Surface state of resin composition and molded article)

The above resin composition and its molded article can satisfy the following requirement (i).

(i): The amount of oxygen atoms on the surface of the resin composition molded article, as determined by X-ray photoelectron spectroscopy, is 0.01 atom% or more and 20.0 atom% or less. The amount of oxygen atoms may be 0.05 atom% or more, 0.10 atom% or more, or 0.20 atom% or more. The amount of oxygen atoms may be 18.0 atom% or less, 15.0 atom% or less, 3 atom% or less, 2.0 atom% or less, or 1.0 atom% or less.

When the requirement (i) is satisfied, the dyeability with disperse dyes can be enhanced because the amount of oxygen atoms on the surface is appropriate.

(iii): In the infrared absorption spectrum of the surface of the resin composition molded article as determined by an infrared spectrophotometer, the RCO/RCH ratio of the peak intensity RCO of the stretching vibration of the C=O bond to the peak intensity RCH of the stretching vibration of the C-H bond is 0.05 or more. The RCO/RCH ratio may be 0.07 or more, 0.10 or more, or 0.12 or more. Although there is no particular upper limit of the RCO/RCH ratio, it may be 1.0 or less, 0.8 or less, or 0.5 or less.

The peak intensity RCO is the maximum absorbance of the peak observed in 1600 to 1800 $cm^{-1}$ in the IR absorption spectrum of the surface of the resin composition molded article after baseline correction in the range of 1600 to 1800 $cm^{-1}$, and corresponds to the C=O stretching vibration intensity of carbonyl.

The peak intensity RCH is the maximum absorbance of the peak observed in 2700 to 3000 $cm^{-1}$ in the IR absorption spectrum of the surface of the resin composition molded article after baseline correction in the range of 2700 to

3000 $cm^{-1}$, and corresponds to the C-H stretching vibration peak intensity of alkanes.

The IR spectrum of the surface of the resin composition molded article can be obtained using an FTIR device by the attenuated total reflection (ATR) method.

The fact that the RCO/RCH ratio is 0.05 or more indicates that C=O bonds are present to some extent or more on the surface of the resin composition molded article. It is considered that the C=O bond, rather than the O-H bond, contributes to the adhesion to the resin film, and it is thought that satisfying the formula (iii) further improves dyeability.

Examples of uses of the resin composition of the present invention include fiber materials, exterior components, furniture and interior decoration components, housing components, toy components, gardening components, automobile components, and packaging materials. Examples of the fiber materials include clothing fabric components, interior fabric components, and industrial fiber components. Examples of the exterior components include carport components, fence components, gate door components, gatepost components, mailbox components, bicycle port components, deck components, sunroom components, roof components, terrace components, handrail components, shade components, and awning components. Examples of the furniture and interior decoration components include sofa components, table components, chair components, bed components, chest components, cabinet components, and dresser components. Examples of the housing components include clock components, mobile phone components, and home appliance components. Examples of the toy components include plastic model components, diorama components, and video game console components. Examples of the gardening components include planter components, vase components, and flowerpot components. Examples of the automobile components include bumper materials, instrument panel materials, and airbag cover materials. Examples of the packaging materials include food packaging materials, textile packaging materials, and packaging materials for miscellaneous goods. Furthermore, other examples of uses include monitor components, office automation (OA) equipment components, medical components, drain pans, toiletry components, bottles, containers, snow removal tool components, and various construction components.

## Examples

(1) Olefin-based polymer A

(A-1) Propylene homopolymer

MFR (230°C, 2.16 kg load): 7 g/10 min
Melting point (Tm): 163°C

(A-2) Ethylene-propylene copolymer

Ethylene content: 4.6%
MFR (230°C, 2.16 kg load): 7 g/10 min
Melting point (Tm): 131°C

(A-3) Propylene homopolymer

MFR (230°C, 2.16 kg load): 20 g/10 min
Melting point (Tm): 163°C

(A-4) Propylene homopolymer

MFR (230°C, 2.16 kg load): 100 g/10 min
Melting point (Tm): 163°C

(2) Aliphatic polyester-based polymer B-1
(B-1-1) Poly(3-hydroxybutyrate-co-3-hydroxyhexanoate)

Structural formula: Formula (BI-3)
Content of comonomer (3HH) component (mol%): 0.2 mol%
Weight-average molecular weight (Mw): 104000
MFR (190°C, 2.16 kg load): 7.8 g/10 min
Melting point (Tm): 177°C

(3) Aromatic polyester-based polymer B-2

(B-2-1) Aromatic polyester

(Trade name) Bellpet E-03, manufactured by Bell Polyester Products, Inc.
MFR (230°C, 2.16 kg load): 8 g/10 min
Heat of fusion (ΔHm): 0 J/g

(B-2-2) Aromatic polyester

(Trade name) Bellpet PRIT30, manufactured by Bell Polyester Products, Inc.
MFR (230°C, 2.16 kg load): 48 g/10 min
Melting point (Tm): 198°C
Heat of fusion (ΔHm): 42 J/g

(B-2-3) Aromatic polyester

(Trade name) Bellpet IP252B, manufactured by Bell Polyester Products, Inc.
MFR (230°C, 2.16 kg load): 20 g/10 min
Heat of fusion (ΔHm): 0 J/g

(4) Compound C
(C-1) Oxazoline group-containing polystyrene

(Trade name) Epocros RPS-1005, manufactured by Nippon Shokubai Co., Ltd.
MFR (230°C, 2.16 kg load): 27.3 g/10 min
Molecular weight (Mw): 157780
Functional group contained: oxazoline group

[Chem. 6]

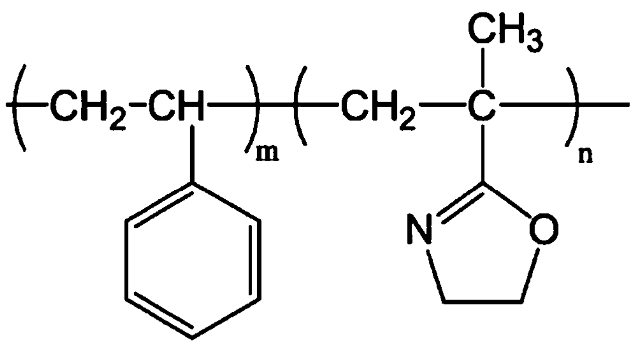

The physical properties of each polymer and composition were measured according to the following methods.

(1) Melt mass flow rate (MFR, unit: g/10 min)

The Melt mass flow rate was measured in accordance with the method specified in JIS K7210-2014. The measurement temperature was 230°C or 190°C, and the load was 2.16 kg.

(2) Weight-average molecular weight (Mw)

The weight-average molecular weight (Mw) was calculated based on the measurement results of gel permeation chromatography (GPC). In the GPC measurement, a GPC-150C manufactured by Waters Corporation was used as the measurement device, an ortho-dichlorobenzene solution with a polymer concentration of 0.05 weight% was used, a mixed polystyrene gel column (PSKgel GMH6-HT, manufactured by Tosoh Corporation) was used as a column, and the measurement temperature was 135°C.

(3) Content of comonomer component in polymer B-1

The content of the comonomer component is the molar ratio of constituent units other than 3-hydroxybutyrate (3-hydroxyhexanoate (3HH) or 4-hydroxybutyrate (4HB)) to the total number of ester constituent units of hydroxyalkanoate of the polymer B-1.
The content of the comonomer component was determined by a method using the 1H-NMR spectrum as described in L. Tripathi., M. C. Factories, 11, 44 (2012).

[Measurement conditions] Instrument: Bruker AVANCE 600
Probe: 10 mm cryoprobe
Measurement temperature: 135°C
Pulse repetition time: 1 sec
Pulse width: 45°
Number of integrations: 700 times
Magnetic field strength: 600 MHz

(4) Melting point (Tm) of polymer

The melting point was measured in accordance with the method specified in JIS K7121. The measurement temperature was -50°C to 200°C or -50°C to 250°C, and the measurement was carried out at a heating rate of 10°C/min.

(5) Dyeing degree

3 g of a resin composition molded article sheet having a thickness of 50 μm or 3 g of a resin composition molded article fiber, which was wound around a wire mesh and flattened, was added to an aqueous solution prepared by mixing 99.8 mass% of an aqueous solution adjusted to a pH of 4 to 5 with acetic acid and 0.2 wt% of disperse dye Mekicron Navy Blue SPW, and dyeing was carried out under the conditions of 130°C for 45 minutes using a mini color dyeing machine, MC-12EL, manufactured by Texam Giken Co., Ltd. as follows.
The dyed resin composition molded article sheet or resin composition molded article fiber was mixed with an aqueous solution prepared by mixing 99.77 mass% of water, 0.3 mass% of sodium hydroxide manufactured by FUJIFILM Wako Pure Chemical Corporation, 0.15 mass% of sodium dithionite, and 0.05 mass% of PEG4000 manufactured by FUJIFILM Wako Pure Chemical Corporation, and washed under conditions of 80°C for 20 minutes.
The K/S value of the washed resin composition molded article sheet or resin composition molded article fiber was calculated based on equation (X) using a color matching device, Gretag Macbeth Color-i5, manufactured by X-Rite, Inc. in accordance with the method specified in JIS K0117:2000. A higher K/S value indicates higher dyeability.

$$K/S = (1 - R)^2 / 2R \ldots (X)$$

K: absorption coefficient of light, S: scattering coefficient of light, R: surface reflectance

(6) Amount of oxygen atoms on surface of resin composition molded article

An X-ray photoelectron spectroscopy device, AXIS ULTRA DLD, manufactured by Shimadzu Corporation/Kratos Analytical Ltd.) was used for measuring the amount of oxygen atoms on the surface of the resin composition molded article. The vacuum degree inside the device during measurement was in the range of $10^{-8}$ to $10^{-9}$ torr. In addition, monochromated Al K$\alpha$ (1486.6 eV) was used as the excitation light for the X-ray source, with an output of a tube current of 10 mA, a tube voltage of 15 kV, and a photoelectron take-off angle of 0°. After performing charge correction based on the binding energy (1486.6 eV) of the carbon 1s level, the background of the spectrum was removed by the Shirley method. Peak separation for the oxygen atom components was performed on the obtained carbon 1s narrow spectrum using a Gaussian-Lorentz composite function (Lorentz function percentage: 30%).

[Measurement conditions] Device: X-ray photoelectron spectroscopy device (AXIS ULTRA DLD, manufactured by Shimadzu Corporation/Kratos Analytical Ltd.)

Light source: Monochromated Al K$\alpha$ (1486.6 eV)
Tube current: 10 mA
Tube voltage: 15 kV
Vacuum degree inside device: $10^{-8}$ to $10^{-9}$ torr
Neutralization gun: Used
Spot size: 300 μm × 700 μm
Scan mode (elements): Narrow (C1s, O1s, P2p)
Pass energy: 20 eV
Step: 0.1 eV
Dwell time: 260 ms (C1s), 332 (O1s), 426 (P2p)
Number of integrations: 5 times (C1s), 10 times (O1s), 20 times (P2p)
Charge correction: Binding energy of carbon 1s level (284.6 eV)
Background: Shirley method

(7) RCO/RCH ratio

An infrared spectrophotometer JASCO FT/IR 6200 was used, and an infrared spectroscopy spectrum of the surface of the resin composition molded article was measured by the attenuated total reflection (ATR) method according to the measurement procedure described below, and the RCO/RCH ratio was determined from the obtained IR spectrum according to equation XXX.

[Measurement conditions]

Measurement mode: ATR method
Prism: Diamond
Measurement wavelength: 600 to 4000 $cm^{-1}$
Number of integrations: 64 times

RCO/RCH = Maximum absorbance of the peak observed in 1600 to 1800 $cm^{-1}$ in the IR spectrum after baseline correction in the range of 1600 to 1800 $cm^{-1}$ (C=O stretching vibration intensity of carbonyl) / Maximum absorbance of the peak observed in 2700 to 3000 $cm^{-1}$ in the IR spectrum after baseline correction in the range of 2700 to 3000 $cm^{-1}$ (C-H stretching vibration peak intensity of alkanes) XXX

(8) Density ($g/cm^3$)

The density of the resin composition was determined in accordance with Method A specified in JIS K7112-1999.

(9) Measurement of heat of fusion of polymer B-2

In accordance with JIS K7122-1987, a DSC curve was obtained at a heating rate of 10°C/min using a DSC Q100

device manufactured by TA Instruments. The heat of fusion was determined from the area of the melting peak.

DSC measurement was performed for each of the polymer B-2 as a raw material before melt-kneading, the composition pellets after melt-kneading, and the molded article (sheet or fiber) obtained from the pellets to obtain the heat of fusion of the polymer B-2. Although the pellets and the molded article are compositions, since there is no component other than the polymer B-2 that melts at 175°C or higher, the heat of fusion of the polymer B-2 in the pellets and molded article can be determined from the DSC curve at 175°C or higher.

(Example 1)

After uniformly mixing 80 mass% of polymer (A-1), 4 mass% of polymer (A-2), 5.0 mass% of polymer (B-1-1), 10 mass% of polymer (B-2-1), and 1 mass% of polymer (C-1) in a powder state, kneading was performed under conditions of a resin temperature of 230°C and a discharge rate of 21 kg/h using TEX25 αIII-52.5CW-4V manufactured by Japan Steel Works Ltd. to obtain pellets of the resin composition. The pellets of the resin composition were sheeted under conditions of a resin temperature of 230°C and a thickness of 50 μm using a 20 mmφ single-screw extruder, VS20-14, manufactured by Tanabe Plastics Machinery Co., Ltd. The dyeability of the obtained sheet was evaluated.

(Example 2)

After uniformly mixing 80 mass% of polymer (A-1), 4 mass% of polymer (A-2), 5.0 mass% of polymer (B-1-1), 10 mass% of polymer (B-2-1), and 1 mass% of polymer (C-1) in a powder state, kneading was performed under conditions of a resin temperature of 230°C and a discharge rate of 21 kg/h using TEX25 αIII-52.5CW-4V manufactured by Japan Steel Works Ltd. to obtain pellets of the resin composition. The pellets of the resin composition were fiberized under conditions of a resin temperature of 250°C and a fiber thickness of 32 μm using a 30 mmφ multifilament production device manufactured by Musashino Kikai Co., Ltd. The dyeability of the obtained fiber was evaluated.

(Example 3)

After uniformly mixing 82 mass% of polymer (A-1), 5.0 mass% of polymer (B-1-1), 10 mass% of polymer (B-2-1), and 3 mass% of polymer (C-1) in a powder state, kneading was performed under conditions of a resin temperature of 230°C and a discharge rate of 21 kg/h using ZSK58MC manufactured by Coperion GmbH to obtain a resin composition. The resin composition was fiberized under conditions of a resin temperature of 250°C and a fiber diameter of 32 μm using a 30 mmφ multifilament production device manufactured by Musashino Kikai Co., Ltd. The dyeability of the obtained fiber was evaluated.

(Example 4)

After uniformly mixing 19 mass% of polymer (A-1), 43 mass% of polymer (A-3), 26 mass% of polymer (A-4), 5.0 mass% of polymer (B-1-1), 5 mass% of polymer (B-2-1), and 1 mass% of polymer (C-1) in a powder state, kneading was performed under conditions of a resin temperature of 240°C and a discharge rate of 21 kg/h using ZSK58MC manufactured by Coperion GmbH to obtain a resin composition. The resin composition was fiberized under conditions of a resin temperature of 250°C and a fiber diameter of 32 μm using PMS30-25, a multifilament production device, manufactured by IKG Co., Ltd. The dyeability of the obtained fiber was evaluated.

(Example 5)

After uniformly mixing 19 mass% of polymer (A-1), 43 mass% of polymer (A-3), 26 mass% of polymer (A-4), 5.0 mass% of polymer (B-1-1), 5 mass% of polymer (B-2-3), and 1 mass% of polymer (C-1) in a powder state, kneading was performed under conditions of a resin temperature of 240°C and a discharge rate of 21 kg/h using ZSK58MC manufactured by Coperion GmbH to obtain a resin composition. The resin composition was fiberized under conditions of a resin temperature of 250°C and a fiber diameter of 32 μm using PMS30-25, a multifilament production device, manufactured by IKG Co., Ltd. The dyeability of the obtained fiber was evaluated.

(Example 6)

After uniformly mixing 20 mass% of polymer (A-1), 44.5 mass% of polymer (A-3), 26 mass% of polymer (A-4), 2.5 mass% of polymer (B-1-1), 5 mass% of polymer (B-2-3), and 1 mass% of polymer (C-1) in a powder state, kneading was performed under conditions of a resin temperature of 240°C and a discharge rate of 21 kg/h using ZSK58MC manufactured by Coperion GmbH to obtain a resin composition. The resin composition was fiberized under conditions of a resin

temperature of 250°C and a fiber diameter of 32 μm using PMS30-25, a multifilament production device, manufactured by IKG Co., Ltd. The dyeability of the obtained fiber was evaluated.

(Example 7)

After uniformly mixing 58 mass% of polymer (A-3), 30.5 mass% of polymer (A-4), 5 mass% of polymer (B-1-1), and 5 mass% of polymer (B-2-3) in a powder state, kneading was performed under conditions of a resin temperature of 240°C and a discharge rate of 21 kg/h using ZSK58MC manufactured by Coperion GmbH to obtain a resin composition. The resin composition was fiberized under conditions of a resin temperature of 250°C and a fiber diameter of 32 μm using PMS30-25, a multifilament production device, manufactured by IKG Co., Ltd. The dyeability of the obtained fiber was evaluated.

(Comparative Example 1)

100 mass% of polymer (A-1) was kneaded under a condition of a resin temperature of 210°C using a 15 mm twin-screw extruder, KZW15-45MG, manufactured by Technovel Corporation to obtain a resin composition. The resin composition was sheeted under conditions of a resin temperature of 230°C and a thickness of 50 μm using a 20 mmφ single-screw extruder, VS20-14, manufactured by Tanabe Plastics Machinery Co., Ltd. The dyeability of the obtained sheet was evaluated.

(Comparative Example 2)

100 mass% of polymer (A-1) was kneaded under a condition of a resin temperature of 210°C using a 15 mm twin-screw extruder, KZW15-45MG, manufactured by Technovel Corporation to obtain a resin composition. The resin composition was fiberized under conditions of a resin temperature of 250°C and a fiber diameter of 32 μm using a 30 mmφ multifilament production device manufactured by Musashino Kikai Co., Ltd. The dyeability of the obtained fiber was evaluated.

(Comparative Example 3)

85.0 mass% of polymer (A-1-1), 5.0 mass% of polymer (B-1-1), and 10 mass% of polymer (B-2-2) were kneaded under a condition of a resin temperature of 210°C using a 15 mm twin-screw extruder, KZW15-45MG, manufactured by Technovel Corporation to obtain a resin composition. The resin composition was sheeted under conditions of a resin temperature of 230°C and a thickness of 50 μm using a 20 mmφ single-screw extruder, VS20-14, manufactured by Tanabe Plastics Machinery Co., Ltd. The dyeability of the obtained sheet was evaluated.

(Comparative Example 4)

100 mass% of polymer (B-2-2) was kneaded under a condition of a resin temperature of 210°C using a 15 mm twin-screw extruder, KZW15-45MG, manufactured by Technovel Corporation to obtain a resin composition. The resin composition was fiberized under conditions of a resin temperature of 250°C and a fiber diameter of 32 μm using a 30 mmφ multifilament production device manufactured by Musashino Kikai Co., Ltd. The dyeability of the obtained fiber was evaluated.

The conditions and results are shown in Tables 1 to 3.

[Table 1]

| Table 1 | | | Exampl e 1 | Exampl e 2 | Exampl e 3 |
|---|---|---|---|---|---|
| Compositio n | Olefin-based polymer (A) | Type | A-1 | A-1 | A-1 |
| | | Mass% | 80 | 80 | 82 |
| | | Type | A-2 | A-2 | - |
| | | Mass% | 4 | 4 | 0 |
| | | Type | - | - | - |
| | | Mass% | 0 | 0 | 0 |
| | | Type | - | - | - |
| | | Mass% | 0 | 0 | 0 |
| | | (A-1)/((A-1)+(A-2)+(A-3)+(A-4 )) | 95.2% | 95.2% | 100.0% |
| | | (A-2)/((A-1)+(A-2)+(A-3)+(A-4 )) | 4.8% | 4.8% | 0.0% |
| | | (A-3)/((A-1)+(A-2)+(A-3)+(A-4 )) | 0.0% | 0.0% | 0.0% |
| | | (A-4)/((A-1)+(A-2)+(A-3)+(A-4 )) | 0.0% | 0.0% | 0.0% |
| | | A/(A+(B-1)+(B-2)) | 84.8% | 84.8% | 84.5% |
| | Aliphatic polyester-base d polymer B-1 | Type | B-1-1 | B-1-1 | B-1-1 |
| | | Mass% | 5 | 5 | 5 |
| | | (B-1)/(A+(B-1)+(B-2)) | 5.1% | 5.1% | 5.2% |
| | Aromatic polye- ster-base d poly- mer B-2 | Type | B-2-1 | B-2-1 | B-2-1 |
| | | Mass% | 10 | 10 | 10 |
| | | (B-2)/(A+(B-1)+(B-2)) | 10.1% | 10.1% | 10.3% |
| | | Heat of fusion (J/g) | 0 | 0 | 0 |
| | Compound C | Type | C-1 | C-1 | C-1 |
| | | Mass% | 1 | 1 | 3 |
| | Heat of fusion of composition | J/g | 0 | 0 | 0 |
| Molded article | Type | | Sheet | Fiber | Fiber |
| | RCO/RCH ratio | | - | 0.33 | 0.26 |
| | Amount of oxygen atoms on surface | atom% | - | 14.0 | 8.4 |
| | Heat of fusion at 175°C or higher | J/g | - | 0 | 0 |
| Evaluation | Dyeability of molded article | K/S value | 9.6 | 20.2 | 23.2 |
| | Density of molded article | $g/cm^3$ | 0.952 | 0.952 | 0.949 |

[Table 2]

| Table 2 | | | Examp le 4 | Examp le 5 | Examp le 6 | Examp le 7 |
|---|---|---|---|---|---|---|
| Compositi on | Olefin-based polymer (A) | Type | A-1 | A-1 | A-1 | - |
| | | Mass% | 19 | 19 | 20 | 0 |
| | | Type | - | - | - | - |
| | | Mass% | 0 | 0 | 0 | 0 |
| | | Type | A-3 | A-3 | A-3 | A-3 |
| | | Mass% | 43 | 43 | 44.5 | 58 |
| | | Type | A-4 | A-4 | A-4 | A-4 |
| | | Mass% | 26 | 26 | 26 | 30.5 |
| | | (A-1)/((A-1)+(A-2) +(A-3)+( A-4)) | 21.6% | 21.6% | 22.1% | 0.0% |
| | | (A-2)/((A-1)+(A-2) +(A-3)+( A-4)) | 0.0% | 0.0% | 0.0% | 0.0% |
| | | (A-3)/((A-1)+(A-2) +(A-3)+( A-4)) | 48.9% | 48.9% | 49.2% | 65.5% |
| | | (A-4)/((A-1)+(A-2) +(A-3)+( A-4)) | 29.5% | 29.5% | 28.7% | 34.5% |
| | | A/(A+(B-1)+(B-2)) | 89.8% | 89.8% | 92.3% | 89.8% |
| | Aliphatic polyester-bas ed polymer B-1 | Type | B-1-1 | B-1-1 | B-1-1 | B-1-1 |
| | | Mass% | 5 | 5 | 2.5 | 5 |
| | | (B-1)/(A+(B-1) +(B-2)) | 5.1% | 5.1% | 2.6% | 5.1% |
| | Aromatic polyester-bas ed polymer B-2 | Type | B-2-1 | B-2-3 | B-2-3 | B-2-3 |
| | | Mass% | 5 | 5 | 5 | 5 |
| | | (B-2)/(A+(B-1) +(B-2)) | 5.1% | 5.1% | 5.1% | 5.1% |
| | | Heat of fusion (J/g) | 0 | 0 | 0 | 0 |
| | Compound C | Type | C-1 | C-1 | C-1 | C-1 |
| | | Mass% | 1 | 1 | 1 | 0 |
| | Heat of fusion of composition | J/g | 0 | 0 | 0 | 0 |
| Molded article | Type | | Fiber | Fiber | Fiber | Fiber |
| | RCO/RCH ratio | | 0.3 | 0.3 | 0.2 | 4.4 |
| | Amount of oxygen atoms on surface | atom% | 12.1 | 13.4 | 11.3 | 19.0 |
| | Heat of fusion at 175°C or higher | J/g | 0 | 0 | 0 | 0 |
| Evaluation | Dyeability of molded article | K/S value | 15.7 | 15.9 | 12.7 | 6.9 |
| | Density of molded article | $g/cm^3$ | 0.931 | 0.931 | 0.931 | 0.921 |

[Table 3]

| Table 3 | | | Comparative Example 1 | Comparative Example 2 | Comparative Example 3 | Comparative Example 4 |
|---|---|---|---|---|---|---|
| Composition | Olefin-based polymer (A) | Type | A-1 | A-1 | A-1 | - |
| | | Mass% | 100 | 100 | 85 | 0 |
| | | Type | - | - | - | - |
| | | Mass% | 0 | 0 | 0 | 0 |
| | | Type | - | - | - | - |
| | | Mass% | 0 | 0 | 0 | 0 |
| | | Type | - | - | - | - |
| | | Mass% | 0 | 0 | 0 | 0 |
| | | (A-1)/((A-1)+(A-2)+(A-3)+(A-4)) | 100.0% | 100.0% | 100.0% | - |
| | | (A-2)/((A-1)+(A-2)+(A-3)+(A-4)) | 0.0% | 0.0% | 0.0% | - |
| | | (A-3)/((A-1)+(A-2)+(A-3)+(A-4)) | 0.0% | 0.0% | 0.0% | - |
| | | (A-4)/((A-1)+(A-2)+(A-3)+(A-4)) | 0.0% | 0.0% | 0.0% | - |
| | | A/(A+(B-1)+(B-2)) | 100.0% | 100.0% | 85.0% | 0.0% |
| | Aliphatic polyester-based polymer B-1 | Type | - | - | B-1-1 | - |
| | | Mass% | 0 | 0 | 5 | 0 |
| | | (B-1)/(A+(B-1)+(B-2)) | 0.0% | 0.0% | 5.0% | 0.0% |
| | Aromatic polyester-based polymer B-2 | Type | - | - | B-2-2 | B-2-2 |
| | | Mass% | 0 | 0 | 10 | 100 |
| | | (B-2)/(A+(B-1)+(B-2)) | 0.0% | 0.0% | 10.0% | 100.0% |
| | | Heat of fusion (J/g) | - | - | 42 | 42 |
| | Compound C | Type | - | - | - | - |
| | | Mass% | 0 | 0 | 0 | 0 |
| | Heat of fusion of composition | J/g | 0 | 0 | 4 | 47 |
| Molded article | Type | | Sheet | Fiber | Sheet | Fiber |
| | RCO/RCH ratio | | - | 0.00 | 0.00 | 3.06 |
| | Amount of oxygen atoms on surface | atom% | - | 0.0 | 0.0 | 21.0 |
| | Heat of fusion at 175°C or higher | J/g | - | 0 | 5 | 42 |

(continued)

| Table 3 | | | Compara tive Example 1 | Compara tive Example 2 | Compara tive Example 3 | Compara tive Example 4 |
|---|---|---|---|---|---|---|
| Evaluati on | Dyeability of molded article | K/S value | 0.2 | 1.25 | 1.25 | 23.7 |
| | Density of molded article | $g/cm^3$ | 0.890 | 0.890 | 0.890 | 1.380 |

**Claims**

1. A resin composition comprising:

    an olefin-based polymer A;
    a polymer B-1; and
    a polymer B-2,
    wherein the polymer B-1 is an aliphatic polyester-based polymer,
    wherein the polymer B-2 is an aromatic polyester-based polymer in which a heat of fusion obtained by differential scanning calorimetry is in a range of 0 to 25 J/g, and
    wherein, relative to 100 parts by mass in total of the polymer A, the polymer B-1, and the polymer B-2, a content of the polymer A is 64 to 95 parts by mass, a content of the polymer B-1 is 1 to 15 parts by mass, and a content of the polymer B-2 is 1 to 35 parts by mass.

2. The resin composition according to claim 1, wherein the polymer B-1 is a polyhydroxyalkanoate-based polymer.

3. The resin composition according to claim 1, wherein the polymer B-1 is a poly(3-hydroxyalkanoate)-based polymer.

4. The resin composition according to any one of claims 1 to 3, wherein, relative to 100 parts by mass in total of the polymer A, the polymer B-1, and the polymer B-2, the content of the polymer A is 79 to 90 parts by mass, the content of the polymer B-1 is 1 to 15 parts by mass, and the content of the polymer B-2 is 1 to 20 parts by mass.

5. The resin composition according to any one of claims 1 to 4, wherein the polymer A contains a propylene homopolymer.

6. A molded article of the resin composition according to any one of claims 1 to 5.

7. The molded article according to claim 6, which is a fiber.

**INTERNATIONAL SEARCH REPORT**

International application No.
**PCT/JP2024/020095**

**A. CLASSIFICATION OF SUBJECT MATTER**

***C08L 23/00***(2006.01)i; ***C08L 23/12***(2006.01)i; ***C08L 67/00***(2006.01)i; ***C08L 67/04***(2006.01)i
FI: C08L23/00; C08L23/12; C08L67/00; C08L67/04

According to International Patent Classification (IPC) or to both national classification and IPC

**B. FIELDS SEARCHED**

Minimum documentation searched (classification system followed by classification symbols)

C08L

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-18362 A (SUMITOMO CHEMICAL COMPANY, LIMITED) 08 February 2023 (2023-02-08)<br>claims, paragraphs [0006], [0095], [0113], example 1 | 1-7 |
| Y | | 1-7 |
| Y | JP 2019-147927 A (TORAY INDUSTRIES, INC.) 05 September 2019 (2019-09-05)<br>paragraph [0021] | 1-7 |
| Y | JP 2016-169334 A (BRABUS JAPAN KK) 23 September 2016 (2016-09-23)<br>paragraph [0009] | 1-7 |
| Y | JP 2001-164423 A (TOYO BOSEKI KABUSHIKI KAISHA) 19 June 2001 (2001-06-19)<br>paragraph [0027] | 1-7 |
| Y | JP 3-2263 A (TORAY INDUSTRIES, INC.) 08 January 1991 (1991-01-08)<br>page 1, lower left column to lower right column | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/020095**

**C. DOCUMENTS CONSIDERED TO BE RELEVANT**

| Category* | Citation of document, with indication, where appropriate, of the relevant passages | Relevant to claim No. |
|---|---|---|
| Y | JP 2008-533315 A (AQUADYE FIBERS, INC.) 21 August 2008 (2008-08-21) claim 1 | 1-7 |
| Y | WO 2017/154665 A1 (TORAY INDUSTRIES, INC.) 14 September 2017 (2017-09-14) paragraph [0028] | 1-7 |
| A | WO 2020/045156 A1 (TORAY INDUSTRIES, INC.) 05 March 2020 (2020-03-05) entire text | 1-7 |

Form PCT/ISA/210 (second sheet) (July 2022)

**INTERNATIONAL SEARCH REPORT**
**Information on patent family members**

International application No.
**PCT/JP2024/020095**

| Patent document cited in search report | Publication date (day/month/year) | Patent family member(s) | Publication date (day/month/year) |
|---|---|---|---|
| JP 2023-18362 A | 08 February 2023 | EP 4368668 A1<br>claims, paragraphs [0006], [0092], [0110], example 1<br>TW 202309234 A<br>CN 117836364 A | |
| JP 2019-147927 A | 05 September 2019 | (Family: none) | |
| JP 2016-169334 A | 23 September 2016 | (Family: none) | |
| JP 2001-164423 A | 19 June 2001 | EP 1188848 A1<br>paragraph [0052]<br>CN 1342222 A<br>KR 10-0537872 B1 | |
| JP 3-2263 A | 08 January 1991 | (Family: none) | |
| JP 2008-533315 A | 21 August 2008 | EP 1861430 A1<br>claim 1<br>CN 101175774 A<br>KR 10-2008-0010392 A | |
| WO 2017/154665 A1 | 14 September 2017 | US 2019/0071797 A1<br>paragraph [0027]<br>EP 3428328 A1<br>CN 108779583 A<br>KR 10-2018-0121477 A<br>TW 201800630 A | |
| WO 2020/045156 A1 | 05 March 2020 | CN 112543790 A<br>TW 202020011 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008261070 A


### Non-patent literature cited in the description


- **A. ZAMBELLI et al.** *Macromolecules*, 1973 (6)
- International Depositary Authority: International Patent Organism Depositary. *National Institute of Advanced Industrial Science and Technology*, 12 August 1996
- *J. Bacteriol.*, 1997, vol. 179, 4821